# EUROPEAN PATENT APPLICATION

(11) **EP 4 485 637 A1**
(43) Date of publication of application: **01.01.2025**
(21) Application number: 22942147.4
(22) Date of filing: 20.05.2022
(51) Int. Cl.: H01M 50/116, H01M 50/124, H01M 10/653, H01M 10/0525, H01M 50/117, H01M 50/121, H01M 50/128, H01M 50/129

(54) **BATTERY CELL, BATTERY AND ELECTRIC DEVICE**

(71) Applicant: Contemporary Amperex Technology Co., Limited, Ningde, Fujian 352100 (CN)
(72) Inventor: HU, Lu, Ningde, Fujian 352100 (CN); CHEN, Xiaobo, Ningde, Fujian 352100 (CN); WANG, Xuehui, Ningde, Fujian 352100 (CN); LI, Yupin, Ningde, Fujian 352100 (CN)
(74) Representative: Jacob, Reuben Ellis
(86) International application number: PCT/CN2022/094184
(87) International publication number: WO 2023/221108

(57) **Abstract**

The embodiments of the present disclosure provide a battery cell, battery, and electrical device, relating to the field of battery technology. The embodiments of the present disclosure provide a battery cell, which comprises an outer shell and an insulating component. The insulating component covers at least a portion of an external surface of the outer shell. The insulating component comprises at least one layer of a first insulation layer, wherein a material damage temperature of each layer of the first insulation layer is T, and a total thickness of at least one layer of the first insulation layer is L₁. It satisfies T≥400°C and L₁≥30µm. The first insulation layer of the insulating component possesses a higher material damage temperature and the total thickness of all the first insulation layers in the insulating component is thicker, so that the insulation properties of the insulating component can be maintained to be effective for a long period of time in a high-temperature environment. The insulation performance of the insulating component is less likely to fail due to thermal runaway of the battery cell in the high-temperature environment, which offers excellent arc resistance capability, reduces the risk of short-circuit due to overlapping between the outer shells of battery cells, and enhances the insulation performance of battery cells in high-temperature environments.

## Description

### Technical Field

The present disclosure relates to the technical field of batteries, in particular to a battery cell, battery, and electrical device.

### Background Art

With the development of new energy technologies, the application of batteries is becoming increasingly widespread. For example, they are used in mobile phones, laptops, electric bicycles, electric cars, electric airplanes, electric ships, electric toy cars, electric toy ships, electric toy airplanes, and electric tools, etc.

In batteries, multiple battery cells are generally connected in series, parallel, or hybrid. To ensure the safety of the battery, the battery cell needs to have good insulation properties to prevent the outer shells of the battery cell from overlapping each other and causing safety accidents. Therefore, how to improve the insulation performance of battery cells is an urgent issue to be addressed in battery technology.

### Summary

The embodiments of the present disclosure provide a battery cell, battery, and electrical device, which can effectively enhance the insulation performance of the battery cell.

On the first aspect, the embodiments of the present disclosure provide a battery cell, comprising an outer shell and an insulating component. The insulating component covers at least a portion of an external surface of the outer shell.

The insulating component comprises at least one layer of a first insulation layer, wherein a material damage temperature of each layer of the first insulation layer is T, and a total thickness of at least one layer of the first insulation layer is L₁, which satisfies T≥400 °C and L₁≥30 µm.

In the above-mentioned technical solution, by setting the material damage temperature of each layer of the first insulation layer in the insulating component to be not less than 400 °C and by setting the total thickness of all the first insulation layers to be not less than 30 µm, the first insulation layer of the insulating component has a higher material damage temperature, and the total thickness of all the first insulation layers in the insulating component is thicker, so that the insulation properties of the insulating component can be maintained to be effective for a long period of time in a high-temperature environment. The insulation performance of the insulating component is less likely to fail due to the thermal runaway of the battery cell at high-temperature environment, which offers excellent arc resistance capability, reduces the risk of short-circuit due to overlapping between the outer shells of battery cells, and enhances the insulation performance of battery cells in high-temperature environment.

In some embodiments, L₁ ≥ (0.1C+30) µm, where C is the capacity of the battery cell in Ah. The larger the capacity of a battery cell is, the greater the thermal runaway energy of the battery cell is, and the longer the duration that the battery cell remains at its peak temperature is. As a result, the thickness of the portion of the external surface of the outer shell of all first insulation layers close to the battery cell, which experiences thermal damage and loses the insulation function, is greater. Consequently, the total thickness of all the first insulation layers needs to be set larger. Therefore, by establishing the relationship equation between the capacity of the battery cell and the total thickness of all the first insulation layers, as described above, it ensures that battery cells of different capacities can all maintain good insulation performance in the case of thermal runaway.

In some embodiments, L₁ ≥ (0.5H+30) µm, where H is a dimension of the outer shell in the thickness direction of the battery cell in mm. The thicker the outer shell is, the higher the temperature in the center area of the battery cell after thermal runaway of the battery cell is. When the heat transfer area of the outer shell remains constant, the thicker battery cell will make the energy of the battery cell more difficultly dissipate through the outer shell, which leads to the battery cell staying at its peak temperature for a longer duration, thereby necessitating a greater total thickness for all the first insulation layers. Therefore, by establishing the relationship equation between the width of the outer shell and the total thickness of all the first insulation layers, as described above, it ensures that the outer shells with different specifications corresponding to battery cells can all maintain good insulation performance in the case of thermal runaway.

In some embodiments, L₁ ≤ 200 µm, preferably, L₁ ≤ 60 µm. The larger the total thickness of all the first insulation layers is, the longer the duration that the insulating component can maintain effective insulation performance in high-temperature environment is. However, this can result in an increase in the volume of the battery cell so that the battery cell occupies a larger external space and consequently reduces the energy density of the battery. Therefore, L₁ ≤200 µm can effectively improve the energy density of the battery. Certainly, L₁ ≤ 60 µm can further improve the energy density of the battery.

In some embodiments, T ≥ 500 °C. In this way, it is possible to enhance the ability of the insulating component to withstand high temperatures, thereby further extending the duration during which the insulating component can maintain effective insulation performance in high-temperature environments. Consequently, the insulation performance of battery cells in high-temperature environments is further improved.

In some embodiments, a material of the first insulation layer comprises at least one of polyimide, mica, aerogel, ceramic, and polytetrafluoroethylene. The first insulation layer made of the materials above has a low cost and comprises both excellent high-temperature resistance and good insulation performance.

In some embodiments, the insulating component comprises at least one layer of a second insulation layer. The second insulation layer is stacked with the first insulation layer. A water absorption rate of each layer of the second insulation layer is W₁, and a water absorption rate of each layer of the first insulation layer is W₂, which satisfies W₁ <W₂. In this way, the second insulation layer possesses excellent water repellency. The arrangement of the second insulation layer enhances the waterproofing capability of the insulating component, and reduces the risk of failure of the insulation performance due to the contact between the outer shell of the battery cell and water throughout a lifecycle. As a result, the insulation performance of the battery cell is improved over the lifecycle.

In some embodiments, W₁ ≤ 0.5%. In this way, the second insulation layer possesses excellent water repellency, thereby reducing the likelihood of the outer shell of the battery cell coming into contact with water during the lifecycle.

In some embodiments, the thickness of each layer of the second insulation layer is L₂, which satisfies L₂ ≤ 30 µm. Preferably, L₂ is ≤ 25 µm. In this way, on the one hand, it can reduce the thickness of the insulating component, decrease the volume of the battery cell, reduce the external space occupied by the battery cell, and enhance the energy density of the battery. On the other hand, it can effectively reduce the difficulty of bending the second insulation layer, improve the manufacturability of arranging the second insulation layer on the outside of the outer shell, reduce the rate of manufacturing defects, and reduce the difficulty of appearance control for arranging the second insulation layer on the outside of the outer shell.

In some embodiments, the material of each layer of the second insulation layer comprises at least one of polyethylene glycol terephthalate, liquid crystal polymer, polycarbonate, polyoxymethylene, and polyphenylene sulfide. The second insulation layer made of the materials above possesses both excellent water-repellent capability and good insulation performance.

In some embodiments, at least one layer of the first insulation layer is arranged between one layer of the second insulation layer and the outer shell. The second insulation layer serves a protective role for the first insulation layer, as the second insulation layer can prevent the first insulation layer from coming into contact with water. This reduces the risk of failure of insulation performance in the first insulation layer due to water absorption.

In some embodiments, one layer of the first insulation layer is arranged between one layer of the second insulation layer and the outer shell. In this way, by placing the first insulation layer on the outer shell and then placing the second insulation layer on the first insulation layer, the insulating component can be formed on the outside of the outer shell. As a result, the number of molding steps is reduced and the molding efficiency is enhanced.

In some embodiments, one layer of the first insulation layer is connected to the external surface of the outer shell through a first adhesive layer; and/or, one layer of the second insulation layer is connected to one layer of the first insulation layer through a second adhesive layer. The first adhesive layer is able to bond one layer of the first insulation layer to the external surface of the outer shell, thereby enhancing the firmness of connecting the layer of the first insulation layer to the outer shell. The second adhesive layer is able to bond one layer of the second insulation layer to one layer of the first insulation layer, thereby enhancing the firmness of connecting the layer of the second insulation layer to the layer of the first insulation layer.

In some embodiments, an outermost layer of the insulating component is the second insulation layer. As the outermost layer of the insulating component, the second insulation layer serves to protect all the first insulation layers within the insulating component, thereby reducing the risk of failure of insulation performance in the first insulation layers due to water absorption.

In some embodiments, at least one layer of the second insulation layer is arranged between one layer of the first insulation layer and the outer shell. The first insulation layer serves a protective role for the second insulation layer, which ensures that the second insulation layer is less susceptible to thermal damage even when the external temperature of the battery cell is excessively high. This guarantees that the second insulation layer maintains excellent water-repellent capability.

In some embodiments, one layer of the second insulation layer is arranged between one layer of the first insulation layer and the outer shell. In this way, by placing the second insulation layer on the outer shell and then placing the first insulation layer on the second insulation layer, the insulating component can be formed on the outside of the outer shell. As a result, the number of molding steps is reduced and the molding efficiency is enhanced.

In some embodiments, one layer of the second insulation layer is connected to the external surface of the outer shell through a first adhesive layer; and/or, one layer of the first insulation layer is connected to one layer of the second insulation layer through a second adhesive layer. The first adhesive layer is able to bond one layer of the second insulation layer to the external surface of the outer shell, thereby enhancing the firmness of connecting the layer of the second insulation layer to the outer shell. The second adhesive layer is able to bond one layer of the first insulation layer to one layer of the second insulation layer, thereby enhancing the firmness of connecting the layer of the first insulation layer to the layer of the second insulation layer.

In some embodiments, multiple layers of the second insulation layer are arranged between one layer of the first insulation layer and the outer shell. In this way, it enhances the waterproofing capability of the entire insulating component, thereby reducing the risk of failure of insulation performance in the battery cell due to contact between the outer shell and water throughout the lifecycle.

In some embodiments, two layers of the second insulation layer are arranged between one layer of the first insulation layer and the outer shell.

In some embodiments, the innermost layer of the second insulation layer is connected to the external surface of the outer shell through a first adhesive layer; and/or, one layer of the first insulation layer is connected to the outermost layer of the second insulation layer through a second adhesive layer; and/or, two adjacent layers of the second insulating layer are connected through the third adhesive layer. By using the first adhesive layer, the innermost layer of the second insulation layer can be bonded to the external surface of the outer shell, thereby enhancing the firmness of connecting the layer of the second insulation layer to the outer shell. By using the second adhesive layer, one layer of the first insulation layer is able to bond to the outermost layer of the second insulation layer, thereby enhancing the firmness of connecting the layer of the first insulation layer to the layer of the second insulation layer. By using the third adhesive layer, the adjacent two layers of the second insulation layer are able to be bonded together, thereby enhancing the firmness between the adjacent two layers of the second insulation layer once they are connected to each other.

In some embodiments, an outermost layer of the insulating component is the first insulation layer. As the outermost layer of the insulating component, the first insulation layer protects all the second insulation layers within the insulating component, thereby ensuring that the second insulation layers maintain excellent water-repellent capability even when the external temperature of the battery cell is excessively high.

In some embodiments, the outer shell comprises a first side surface. When the multiple battery cells are arranged along the first direction, the first side surfaces of two adjacent outer shells are arranged opposite to each other. The insulating component covers at least the first side surfaces. In this way, the portion of the insulating components covering the first side surface can reduce the risk of short-circuit caused by overlapping between the first side surfaces of two adjacent outer shells, thereby achieving insulation between two adjacent battery cells.

In some embodiments, the first side surface is the surface that has the largest area in the external surfaces of the outer shell, and the first direction is the thickness direction of the battery cell. In this way, it can reduce the overall dimension of the multiple battery cells that are arranged in the first direction, which is advantageous for enhancing the energy density of the battery.

In some embodiments, the outer shell comprises two first side surfaces arranged opposite each other. The insulating component covers at least the two first side surfaces. In this way, in the arrangement of the multiple battery cells, it is possible to achieve insulation between any two adjacent battery cells.

In some embodiments, the outer shell also comprises two second side surfaces arranged opposite each other. The two second side surfaces are connected sequentially end-to-end with the two first side surfaces. The insulating component also covers the two second side surfaces. In this way, the insulating component covers both the two first side surfaces and the two second side surfaces, thus achieving full covering for four side surfaces of the outer shell by the insulating component, which enhances the insulation performance of the battery cell.

In the second aspect, the embodiments of the present disclosure provide a battery, which comprises a box and a battery cell provided in any embodiment in the above first aspect. The battery cell is contained within the box.

In some embodiments, the battery comprises multiple battery cells, and there is a voltage difference between two adjacent battery cells, wherein the voltage difference is denoted as U with a unit of V, satisfying: L₁ ≥ (0.4U+30)µm. The insulation performance of the first insulation layer will be compromised in high-temperature environments. In all the first insulation layers, the portion of the external surface of the outer shell that is closer to the battery cell may lose its insulating function. When the voltage difference between two adjacent battery cells increases, the thickness of the first insulation layer that has lost its insulating function also increases. Consequently, there is a need to increase the total thickness of all the first insulation layers. Therefore, by setting the relationship equation between the voltage difference between battery cells and the total thickness of all the first insulation layers, as described above, it ensures that the battery cells maintain good insulation performance in high-temperature and high-voltage environments.

The embodiments of the present disclosure further provide an electrical device, which comprises a battery cell provided by any embodiment in the above first aspect. The battery cell is configured to supply electric energy to the electrical device.

### Brief Description of Drawings

To more clearly illustrate the technical solutions of the embodiments of the present disclosure, the following will briefly introduce the drawings used in the embodiments. It should be understood that the following drawings only show some embodiments of the present disclosure, and therefore they should not be regarded as a limitation on the scope. Those ordinarily skilled in the art can also obtain other related drawings based on these drawings without inventive effort.
FIG. 1 is a schematic diagram of a structure of a vehicle provided in some embodiments of the present disclosure;
FIG. 2 is an exploded view of a battery provided in some embodiments of the present disclosure;
FIG. 3 is an exploded view of a battery cell provided in some embodiments of the present disclosure;
FIG. 4 is an exploded view of an insulating component and an outer shell provided in some embodiments of the present disclosure;
FIG. 5 is a partial sectional view of a connection of the insulating component to the outer shell provided in some embodiments of the present disclosure;
FIG. 6 is partial sectional view of the connection of the insulating component to the outer shell provided in some other embodiments of the present disclosure;
FIG. 7 is partial sectional view of the connection of the insulating component to the outer shell provided in some other embodiments of the present disclosure;
FIG. 8 is partial sectional view of the connection of the insulating component to the outer shell provided in some other embodiments of the present disclosure;
FIG. 9 is an axonometric view of the connection of the insulating component to the outer shell provided in some embodiments of the present disclosure;
FIG. 10 is a sectional view of the connection of the insulating component to the outer shell provided in some embodiments of the present disclosure;
FIG. 11 is a sectional view of the connection of the insulating component to the outer shell provided in some other embodiments of the present disclosure; and
FIG. 12 is a schematic diagram of a structure of a battery module provided in some embodiments of the present disclosure.

Reference numerals: 1-outer shell; 11-shell; 111-side wall; 112-bottom wall; 113-first side surface; 114-second side surface; 12-end cap; 2-electrode assembly; 21-positive terminal tab; 22-negative terminal tab; 31-positive electrode terminal; 32-negative electrode terminal; 4-insulating component; 41-first insulation layer; 42-second insulation layer; 43-first adhesive layer; 44-second adhesive layer; 45-third adhesive layer; 10-battery cell; 20-box; 201-first part; 202-second part; 30-battery module; 301-busbar component; 100-battery; 200-controller; 300-motor; 1000-vehicle; X-length direction; Y-width direction; Z-height direction.

### Detailed Description of Embodiments

In order to make the objectives, technical solutions and advantages of the embodiments of the present disclosure clearer, the technical solutions in the embodiments of the present disclosure will be described clearly below with reference to the drawings in the embodiments of the present disclosure. Obviously, the embodiments described are some of, rather than all of, the embodiments of the present disclosure. All the other embodiments obtained by those of ordinary skill in the art based on the embodiments of the present disclosure without any creative effort shall fall within the scope of protection of the present disclosure.

Unless otherwise defined, all technical and scientific terms used in the present disclosure have the same meanings as those commonly understood by those skilled in the art to which the present disclosure belongs. The terms used in the description of the present disclosure are merely for the purpose of describing specific embodiments, but are not intended to limit the present disclosure. The terms "comprise/include", "provide", and any variations thereof in the description and claims, as well as the brief description of the drawings described above of the present disclosure are intended to cover non-exclusive inclusions. The terms "first", "second", etc. in the description and the claims of the present disclosure or the drawings are used to distinguish different objects, rather than to describe specific sequences or primary and secondary relationships.

In the present disclosure, the phrase "embodiment" mentioned means that the specific features, structures, or characteristics described with reference to the embodiments may be encompassed in at least one embodiment of the present disclosure. The phrase at various locations in the description does not necessarily refer to the same embodiment, or an independent or alternative embodiment exclusive of another embodiment.

In the description of the present disclosure, it should be noted that unless otherwise explicitly specified and defined, the terms "install", "link", "connect" and "attach" should be understood in a broad sense, for example, it may be a fixed connection, a detachable connection, or an integrated connection; and may be a direct connection, an indirect connection by means of an intermediate medium, or internal communication between two elements. For those of ordinary skill in the art, the specific meaning of the foregoing terms in the present disclosure may be understood according to specific circumstances.

The term "and/or" in the present disclosure is only a description for the association relationship of the associated objects, indicating that there can be three types of relationships. For example, A and/or B can indicate three conditions: the presence of only A, the presence of both A and B, and the presence of only B. In addition, the character "/" in the present disclosure generally indicates that the associated objects before and after have an "or" relationship.

In the embodiments of the present disclosure, the same reference signs represent the same components, and for simplicity, detailed descriptions for the same components are omitted in different embodiments. It should be understood that the thickness, length, width, and other dimensions of various components in the embodiments of the present disclosure shown in the drawings, as well as the overall thickness, length, width, and other dimensions of the integrated device, are only illustrative examples and should not constitute any limitations to the present disclosure.

The term "multiple (a plurality of)" in the present disclosure refers to two or more (including two).

In the present disclosure, the battery cell can include a lithium ion secondary battery, a lithium ion primary battery, a lithium sulfur battery, a sodium lithium ion battery, a sodium ion battery or a magnesium ion battery, etc., which is not limited by the embodiments of the present disclosure. The battery cell can be cylindrical, flat, or rectangular, or be of other shapes, which is also not limited by the embodiments of the present disclosure. Battery cells are generally divided into three types according to the packaging method: cylindrical battery cell, square battery cell, and soft pack battery cell, which is also not limited by the embodiments of the present disclosure.

The battery mentioned in the embodiments of the present disclosure refers to a single physical module that includes one or more battery cells to provide higher voltage and capacity. For example, the batteries mentioned in the present disclosure may include battery modules or battery packs, etc. Battery generally includes a box used to encapsulate one or more battery cells. The box can prevent liquids or other foreign objects from affecting the charging or discharging of battery cells.

The battery cell includes an electrode assembly and an electrolyte, and the electrode assembly consists of a positive electrode plate, a negative electrode plate, and a separator. Battery cells mainly rely on metal ions moving between the positive and negative electrode plates to operate. The positive electrode plate includes a positive electrode current collector and a positive electrode active substance layer, wherein the positive electrode active substance layer is coated on the surface of the positive electrode current collector. The positive electrode current collector which is not coated with the positive electrode active substance layer protrudes from the positive electrode current collector which has been coated with the positive electrode active substance layer, and the positive electrode current collector which is not coated with the positive electrode active substance layer serves as the positive terminal tab. Taking lithium ion batteries as an example, the material for the positive electrode current collector can be aluminum, and the positive electrode active substance can be lithium cobalt oxide (lithium cobaltate), lithium iron phosphate, ternary lithium, or lithium manganese oxide (lithium manganate). The negative electrode plate includes a negative electrode current collector and a negative electrode active substance layer, wherein the negative electrode active substance layer is coated on the surface of the negative electrode current collector. The negative electrode current collector which is not coated with the negative electrode active substance layer protrudes from the negative electrode current collector which has been coated with the negative electrode active substance layer, and the negative electrode current collector which is not coated with the negative electrode active substance layer serves as the negative terminal tab. The material for the negative electrode current collector can be copper, and the negative electrode active substance can be carbon, silicon or the like. In order to ensure that a fusing does not occur when a high current passes through, the number of positive terminal tabs is multiple and laminated together, and the number of negative terminal tabs is multiple and laminated together. The material of the separator can be PP (polypropylene) or PE (polyethylene), etc. In addition, the electrode assembly can be of a wound structure or a laminated structure (stacked structure), and the embodiments of the present disclosure are not limited to this.

The development of battery technology needs to consider multiple design factors simultaneously, such as energy density, cycle life, discharge capacity, charge-discharge rate, and other performance parameters. Additionally, the safety of the battery also needs to be taken into consideration.

For battery cells, the safety of the battery cell involves considering not only their internal structure but also their external structure, for instance, the insulation structure on the outside of the battery cell. To meet the insulation requirements on battery cells, the insulating component can be provided on the external surface of the outer shell, which provides the battery cell with a certain insulation capability, thus preventing safety incidents due to the overlapping between the outer shells of battery cells.

The inventors have noticed that as for batteries, even when insulating components are provided on the outer shells of battery cells, safety incidents such as battery fire and explosions can still occur. Further research by the inventors has revealed that during thermal runaway of battery cells, the insulating components on the outer side of the battery cell can easily lose their insulation performance in high-temperature environments. Within the battery, the overlapping between the outer shells of battery cells will generate electrical arcs, which make the battery cell damaged, resulting in spreading of thermal runaway or fire, and safety incidents.

Based on the above considerations, to address the issue of insulation performance failure of the insulating component in battery cells under high-temperature environment, the inventors conducted in-depth research and designed a battery cell. In this design, the material damage temperature of each layer of the first insulation layer within the insulating component is set to be not less than 400°C, and the total thickness of all first insulation layers within the insulating component is set to be not less than 30 µm.

In such battery cells, the first insulation layer of the insulating component possesses a higher material damage temperature, and the total thickness of all the first insulation layers in the insulating component is thicker, so that the insulation properties of the insulating component can be maintained to be effective for a long period of time in a high-temperature environment. The insulation performance of the insulating component is less likely to fail due to thermal runaway of battery cells at high-temperature environment, which offers excellent arc resistance capability and enhances the insulation performance of battery cells in high-temperature environments.

The technical solution described in the embodiments of the present disclosure is applicable to batteries and electrical device using batteries.

The electrical device can be a vehicle, a mobile phone, a portable device, a notebook computer, a ship, a spacecraft, an electric toy, an electric tool, and the like. The vehicle can be a fuel vehicle, a gas vehicle, or a new energy vehicle, wherein the new energy vehicle can be a pure electric vehicle, a hybrid electric vehicle, a range extended vehicle, or the like; the spacecraft comprises an aircraft, a rocket, a space shuttle, a spacecraft, and the like; the electric toys include a stationary or mobile electric toys, such as a game console, an electric vehicle toy, an electric ship toy, an electric airplane toy, and the like; and the electric tools include a metal cutting electric tool, a grinding electric tool, an assembly electric tool, and an electric tool for railways, such as an electric drill, an electric grinder, an electric wrench, an electric screwdriver, an electric hammer, an electric impact drill, a concrete vibrator, and an electric planer. The foregoing electrical device is not specially limited in the embodiment of the present disclosure.

For ease of description, the following embodiments will be described by taking an electrical device being a vehicle as an example.

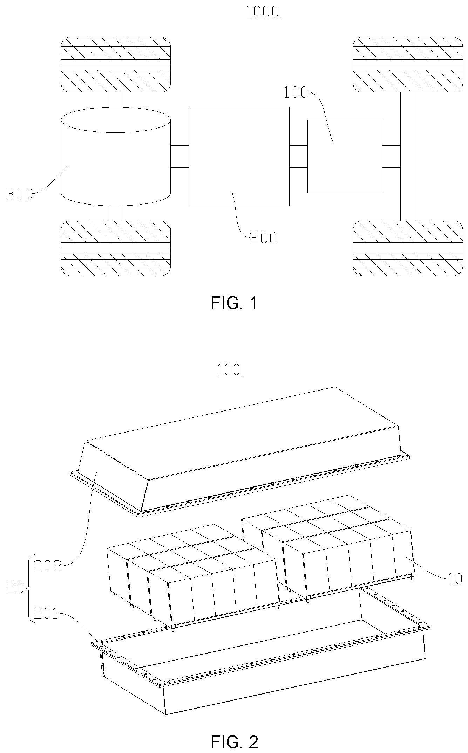

Referring to FIG. 1, FIG. 1 is a structural schematic view of the vehicle 1000 provided in some embodiments of the present disclosure. The interior of vehicle 1000 is equipped with battery 100, which can be installed at the bottom, head, or tail of vehicle 1000. Battery 100 can be used for the power supply for the vehicle 1000. For example, battery 100 can serve as the operating power supply for vehicle 1000.

The vehicle 1000 can also include a controller 200 and a motor 300, wherein the controller 200 is used to control the battery 100 to supply power to the motor 300, for example, used for the working power demand during startup, navigation, and running of the vehicle 1000.

In some embodiments of the present disclosure, the battery 100 can not only serve as the operating power source for vehicle 1000, but also as the driving power source for vehicle 1000, thereby replacing or partially replacing fuel or natural gas to provide driving power for vehicle 1000.

Referring to FIG. 2, FIG. 2 is an exploded view of the battery 100 provided in some embodiments of the present disclosure. The battery 100 includes a battery cell 10 and a box 20, which is used to accommodate the battery cell 10.

In the above, the box 20 is a component that accommodates the battery cell 10, and the box 20 provides an accommodating space for the battery cell 10. The box 20 can be of various structures. In some embodiments, the box 20 may include a first part 201 and a second part 202, with the first part 201 and the second part 202 covering each other, so as to define an accommodating space for accommodating the battery cell 10. The first part 201 and the second part 202 can be of various shapes, such as cuboid, cylinder, etc. The first part 201 can be of a hollow structure with one side opened, and the second part 202 can also be of a hollow structure with one side opened. The opened side of the second part 202 covers the opened side of the first part 201, so as to form a box 20 with accommodating space. It can also be that the first part 201 is of a hollow structure with one side opened, the second part 202 is of a plate-like structure, and the second part 202 covers the opened side of the first part 201, so as to form a box 20 with accommodating space. The first part 201 and the second part 202 can be sealed through sealing elements, which can be sealing rings, sealants, etc.

In battery 100, one or multiple battery cells 10 can be provided. If multiple battery cells 10 are provided, the multiple battery cells 10 can be connected in series, parallel, or hybrid. Hybrid connection means that both series connection and parallel connection exist among multiple battery cells 10. It is possible that multiple battery cells 10 are first connected in series, parallel, or hybrid to form a battery module 30 (not shown in FIG. 2), and multiple battery modules 30 are then connected in series, parallel, or hybrid to form a whole to be accommodated in the box 20. Alternatively, all battery cells 10 can be directly connected in series, parallel, or hybrid together, and then the entire body composed of all battery cells 10 can be accommodated in the box 20.

In some embodiments, battery 100 may also include a busbar component 301 (not shown in FIG. 2), and multiple battery cells 10 may be electrically connected through the busbar component 301, so as to achieve series, parallel, or hybrid connection of multiple battery cells 10. The busbar component 301 can be metal conductors, such as copper, iron, aluminum, stainless steel, and aluminum alloy.

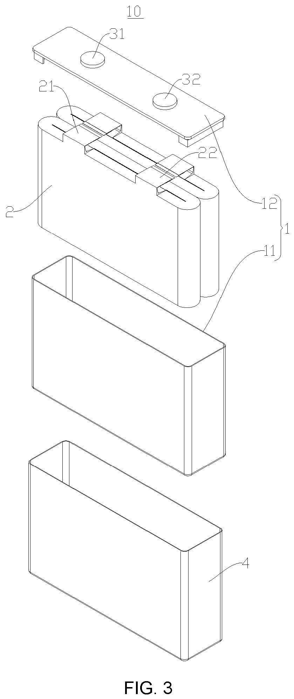

Referring to FIG. 3, FIG. 3 is an exploded view of a battery cell 10 provided in some embodiments of the present disclosure. The battery cell 10 can comprise an outer shell 1, an electrode assembly 2, and an insulating component 4.

The outer shell 1 is a component configured to accommodate the electrode assembly 2. The outer shell 1 can be of various shapes, such as cylinder, cuboid, and so on. The outer shell 1 can comprise a shell 11 and an end cap 12, wherein the shell 11 is provided with an opening, and the end cap 12 covers the opening of the shell 11. The end cap 12 and the shell 11 jointly define a sealed space.

In this case, the shell 11 can be of a hollow structure with an opening formed at one end, or the shell 11 can be of a hollow structure with openings formed at two opposite ends. The material of the shell 11 can be diverse, such as copper, iron, aluminum, steel, aluminum alloy, and so on.

The end cap 12 is a component that blocks the opening of the shell 11, thereby isolating the internal environment of the battery cell 10 from the external environment. The end cap 12, together with the shell 11, defines a sealed space configured to accommodate the electrode assembly 2, electrolyte, and other components. The end cap 12 can be connected to the shell 11 in the manner of welding or crimping to seal the opening of the shell 11. The shape of the end cap 12 can be adapted to the shape of the outer shell 1, for example, if the shell 11 is of a cuboid structure, the end cap 12 can be a rectangular plate-like structure that fits with the outer shell 1. For another example, if the shell 11 is cylindrical, the end cap 12 can be a circular plate-like structure that fits with the shell 11. The material of the end cap 12 can also be diverse, such as copper, iron, aluminum, steel, aluminum alloy, and the like.

In the battery cell 10, there can be one or two end caps 12. In the embodiment where the shell 11 is of a hollow structure with openings at both ends, two end caps 12 can correspondingly be arranged. These two end caps 12 respectively seal the two openings of the shell 11; and together with the shell 11, the two end caps 12 define the sealed space. In the embodiment where the shell 11 is of a hollow structure with an opening at one end, one end cap 12 can correspondingly be arranged. The end cap 12 seals the opening of one end of the shell 11; and together with the shell 11, the single end cap 12 defines the sealed space.

The electrode assembly 2 is the component within the battery cell 10 where electrochemical reactions occur. The electrode assembly 2 can comprise a positive electrode plate, a negative electrode plate, and a separator. The electrode assembly 2 can be of a wound structure formed by winding a positive electrode plate, a separator, and a negative electrode plate. It can also be of a stacked structure formed by stacking a positive electrode plate, a separator, and a negative electrode plate. The electrode assembly 2 comprises a positive terminal tab 21 and a negative terminal tab 22. The positive terminal tab 21 can refer to the portion of the positive electrode plate that is not coated with positive electrode active substance layer. The negative terminal tab 22 can refer to the portion of the negative electrode plate that is not coated with negative electrode active substance layer.

The battery cell 10 can also comprise electrode terminals, wherein the electrode terminals are arranged on the end cap 12. The electrode terminals are configured to be in electrical connection with the tabs of the electrode assembly 2, thus enabling the output of electrical energy of the battery cell 10. The electrode terminals can be directly connected to the tabs, for example, by directly welding the electrode terminals to the tabs. Alternatively, the electrode terminals can be indirectly connected to the tabs, for example, the electrode terminals and the tabs are connected indirectly via a current collecting component. The current collecting component can be a metallic conductor, such as copper, iron, aluminum, steel, aluminum alloy, etc.

As shown in FIG. 3, taking the shell 11 being of a hollow structure with an opening at one end as an example, two electrode terminals can be provided on the end cap 12. These two electrode terminals are respectively the positive electrode terminal 31 and the negative electrode terminal 32. The positive electrode terminal 31 is electrically connected to the positive terminal tab 21, while the negative electrode terminal 32 is electrically connected to the negative terminal tab 22.

The insulating component 4 is a component provided on the outer surface of outer shell 1 to achieve insulation between outer shell 1 and other external components. The insulating component 4 is made of insulating material, which provides good insulation ability for the battery cell 10. The insulating component 4 can cover the outer surface of at least one of shell 11 and end cap 12.

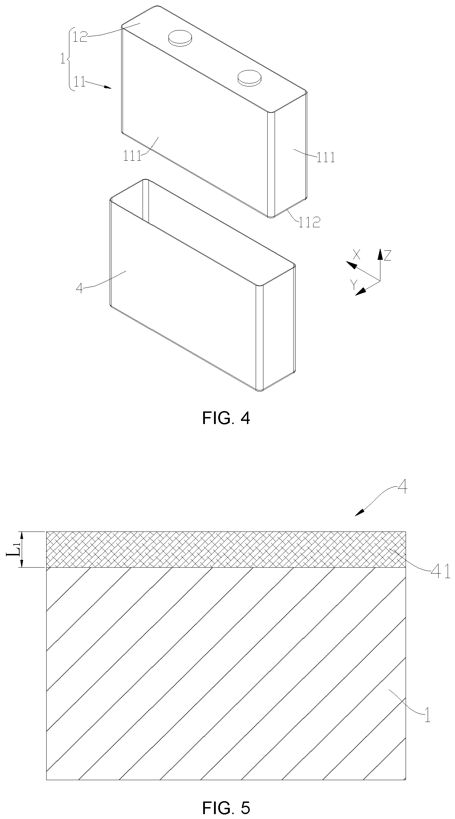

Referring to FIGS. 4 and 5, FIG. 4 is an exploded view of insulating component 4 and outer shell 1 provided in some embodiments of the present disclosure; and FIG. 5 is a partial sectional view showing insulating component 4 connected to the outer shell 1 provided in some embodiments of the present disclosure. The embodiments of the present disclosure provide a battery cell 10, comprising an outer shell 1 and an insulating component 4. The insulating component 4 covers at least a portion of an external surface of the outer shell 1. The insulating component 4 comprises at least one layer of a first insulation layer 41, wherein a material damage temperature of each layer of the first insulation layer 41 is T, and a total thickness of at least one layer of the first insulation layer 41 is L₁, which satisfies T ≥400 °C and L₁ ≥30 µm.

The insulating component 4 can cover a portion the outer surface of the outer shell 1 or cover the entire outer surface of the outer shell 1. Taking as an example that the outer shell 1 is of a cuboid and that an opening is formed at one end of the shell 11, the shell 11 comprises four side walls 111 and a bottom wall 112 located at the bottom of the side walls 111. The four side walls 111 are connected sequentially end-to-end, with two side walls 111 arranged opposite each other along the length direction X of the outer shell 1, and the other two side walls 111 arranged opposite each other along the width direction Y of the outer shell 1. Along the height direction Z of the outer shell 1, the bottom wall 112 is connected to one ends of the four side walls 111, and the shell 11 forms an opening at the end opposite to the bottom wall 112. The outer surfaces of the four side walls 111, the outer surface of the bottom wall 112, and the outer surface of the end cap 12 together constitute the outer surface of the outer shell 1. The insulating component 4 can cover the outer surface of one or more of the four side walls 111, the bottom wall 112, and the end cap 12. For example, the insulating component 4 can cover the outer surfaces of the four side walls 111 of shell 11, thus achieving the insulating component 4 partially covering the outer surface of the outer shell 1. Another example is that the insulating component 4 can cover the outer surfaces of the four side walls 111, the bottom wall 112, and the end cap 12 of the outer shell 1, thus achieving the insulating component 4 covering the entire outer surface of the outer shell 1. The insulating component 4 can be wrapped around the outer surface of the shell 11 along the circumferential direction of the shell 11 so as to cover the outer surfaces of the four side walls 111 of the shell 11.

The first insulation layer 41 in the insulating component 4 can be a single layer or multiple layers. The total thickness of at least one layer of the first insulation layer 41 is the total thickness of all the first insulation layers 41. If the first insulation layer 41 of the insulating component 4 is a single layer, the total thickness of at least one layer of the first insulation layer 41 is the thickness of the single layer of the first insulation layer 41. If the first insulation layer 41 of the insulating component 4 comprises multiple layers, the total thickness of at least one layer of the first insulation layer 41 is the sum of the thicknesses of the multiple layers of the first insulation layer 41. Taking the first insulation layer 41 of the insulating component 4 having two layers as an example, the total thickness of at least one layer of the first insulation layer 41 is the sum of the thicknesses of the two layers of the first insulation layer 41.

The material damage temperature of a certain substance can be its melting point or its decomposition temperature. A decomposition temperature of a certain substance is the temperature at which it undergoes a decomposition reaction. If a substance has both a melting point and a decomposition temperature, the decomposition temperature is the material damage temperature of this substance. If a substance has only a melting point and no decomposition temperature, the melting point is the material damage temperature of this substance. If a substance has only a decomposition temperature and no melting point, the decomposition temperature is the material damage temperature of this substance.

In the embodiments of the present disclosure, by setting the material damage temperature of each layer of the first insulation layer 41 in the insulating component 4 to be not less than 400 °C and by setting the total thickness of all the first insulation layers 41 to be not less than 30 µm, the first insulation layer 41 of the insulating component 4 has a higher material damage temperature, and the total thickness of all the first insulation layers 41 in the insulating component 4 is thicker so that the insulation properties of the insulating component 4 can be maintained to be effective for a long period of time in a high-temperature environment. The insulation performance of the insulating component 4 is less likely to fail due to the thermal runaway of battery cell 10 in the high-temperature environment, which offers excellent arc resistance capability, reduces the risk of short-circuit due to overlapping between the outer shells 1 of battery cells 10, and enhances the insulation performance of battery cells 10 in high-temperature environments.

In some embodiments, L₁ ≥ (0.1C+30) µm, where C is the capacity of the battery cell 10 in ampere-hour (Ah).

Taking the capacity of the battery cell 10 as 120 Ah as an example, L₁ ≥ (0.1 × 120 + 30) µm = 42 µm. It can be seen that for a battery cell 10 with a capacity of 120 Ah, the minimum total thickness of all the first insulation layers 41 in the insulating component 4 can be 42 µm.

The capacity of the battery cell 10 is measured as follows:
selecting the battery cell 10 to be tested; using a charge-discharge machine along with a high-low temperature chamber to test a standard-rate full-charging capacity and discharging capacity of the battery cell 10 at a temperature of 25°C, wherein the discharging capacity is the nominal capacity value of the battery cell 10. The charging-discharging rate is set at 0.33 C, where C represents the rated capacity of the battery cell 10. The charging/discharging current is calculated by multiplying the rate with the rated capacity of the battery cell 10. The rated capacity is based on the capacity of battery cell 10 as identified in the GBT certification document for that battery cell 10, the battery 100 module to which that battery cell 10 belongs, or the battery 100 pack to which that battery cell 10 belongs.

Specifically, the process of testing the capacity of the battery cell 10 is as follows: (1) standing at 25°C for 30 minutes; (2) discharging at a constant current of 0.33C until reaching the discharge cut-off voltage (e.g., 2.8V for battery cell 10 in NCM chemistry system, 2.5V for battery cell 10 in LFP chemistry system), after that, standing for 30 minutes; (3) charging at a constant current of 0.33C until reaching the charge cut-off voltage (e.g., 4.35V for battery cell 10 in NCM chemistry system, 3.65V for battery cell 10 in LFP chemistry system), charging at constant voltage until the current is below 0.05C, and then standing for 5 minutes; and (4) discharging at a constant current of 0.33C until reaching the discharge cut-off voltage. At this time, the discharge capacity tested is the nominal capacity value of the battery cell 10. The relevant terminology and testing methods can refer to GBIT 19596, GBIT 31484-2015, GBIT 31485-2015, GBIT 31486-2015, and "Safety Requirements for Power Batteries for Electric Vehicles".

For the battery cell 10, the larger the capacity of a battery cell 10 is, the greater the thermal runaway energy of the battery cell 10 is, and the longer the duration that the battery cell 10 remains at its peak temperature is. As a result, the thickness of the portion of the external surface of the outer shell 1 of all first insulation layers 41 close to the battery cell 10, which experiences thermal damage and loses the insulation function, is larger. Consequently, the total thickness of all the first insulation layers 41 needs to be set larger.

Therefore, by establishing the relationship equation between the capacity of the battery cell 10 and the total thickness of all the first insulation layers 41, as described above, it ensures that battery cells 10 of different capacities can all maintain good insulation performance in the case of thermal runaway.

In some embodiments, L₁ ≥ (0.5H+30) µm, where H is a dimension of the outer shell 1 in the thickness direction of the battery cell 10 in mm.

In the battery 100, if multiple battery cells 10 are arranged, the arrangement direction of the multiple battery cells 10 can be consistent with the thickness direction of the battery cells 10. Taking the outer shell 1 as a cuboid for example, if the thickness direction of battery cell 10 is consistent with the width direction Y of the outer shell 1, the dimension of the outer shell 1 in the thickness direction of battery cell 10 is the width of the outer shell 1.

Taking the external dimension of 55mm × 175mm × 208mm of the battery cell 10 as an example, the battery cell 10 has a length of 208 mm, a width of 55 mm, a height of 175 mm, and L₁ ≥ (0.5 × 55 + 30) µm = 57.5 µm. It can be seen that, for the outer shell 10 with the width of the outer shell 1 of 55 mm, the minimum value of the total thickness of all of the first insulation layers 41 in the insulating component 4 can be 57.5 µm.

The thicker the outer shell 1 is, the higher the temperature in the center area of the battery cell 10 after thermal runaway of the battery cell 10 is. When the heat transfer area of the outer shell 1 remains constant, the thicker battery cell 10 will make the energy of the battery cell 10 more difficultly dissipate through the outer shell, which leads to the battery cell 10 staying at its peak temperature for a longer duration, thereby necessitating a greater total thickness for all the first insulation layers 41.

Therefore, by establishing the relationship equation between the width of the outer shell 1 and the total thickness of all the first insulation layers 41, as described above, the outer shells 1 with different specifications corresponding to battery cells 10 can all maintain good insulation performance in the case of thermal runaway.

In some embodiments, L₁≤200 µm.

Exemplary, L₁ can be 10 µm, 20 µm, 30 µm, 40 µm, 50 µm, 60 µm, 70 µm, 80 µm, 90 µm, 100 µm, 110 µm, 120 µm, 130 µm, 140 µm, 150 µm, 160 µm, 170 µm, 180 µm, 190 µm, 200 µm, and so on.

Preferably, L₁ ≤ 60 µm.

The larger the total thickness of all the first insulation layers 41 is, the longer the duration that the insulating component 4 can maintain effective insulation performance in high-temperature environment is. However, this can result in an increase in the volume of the battery cell 10 so that the battery cell 10 occupies a larger external space and consequently reduces the energy density of the battery 100.

Therefore, L₁ ≤ 200 µm can effectively improve the energy density of the battery 100. Certainly, L₁ ≤ 60 µm can further improve the energy density of the battery 100.

In some embodiments, T≥500 °C. In this way, it is possible to enhance the ability of the insulating components 4 to withstand high temperatures, thereby further extending the duration during which the insulating component 4 can maintain effective insulation performance in high-temperature environments. Consequently, the insulation performance of battery cells 10 in high-temperature environments is further improved.

In some embodiments, a material of the first insulation layer 41 comprises at least one of polyimide (PI), mica, aerogel, ceramic, and polytetrafluoroethylene (Teflon).

Teflon is also known as polytetrafluoroethylene (PTFE). The material damage temperature of both Teflon and polyimide is above 400°C. The material damage temperature of mica, aerogel, and ceramic is above 500°C.

The first insulation layer 41 made of the materials above has a low cost and comprises both excellent high-temperature resistance and good insulation performance.

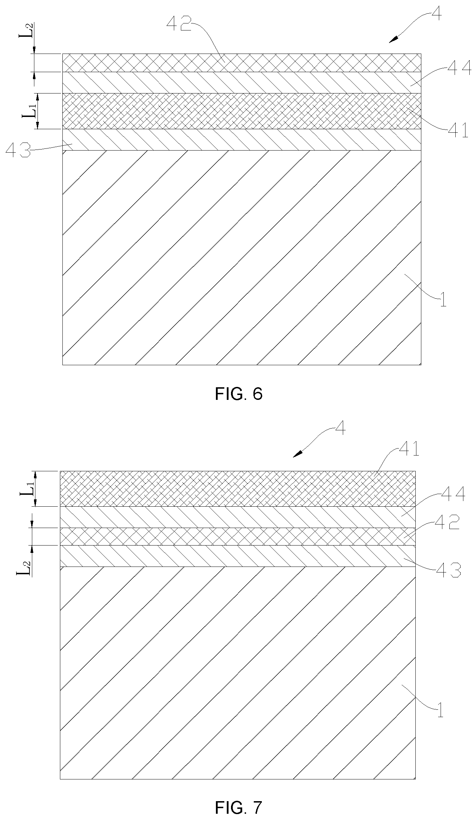

In some embodiments, referring to FIG.6, FIG. 6 is partial sectional view of the connection of insulating component 4 to the outer shell 1 provided in some other embodiments of the present disclosure. The insulating component 4 comprises at least one layer of a second insulation layer 42. The second insulation layer 42 is stacked with the first insulation layer 41. A water absorption rate of each layer of the second insulation layer 42 is W₁, and a water absorption rate of each layer of the first insulation layer 41 is W₂, satisfying: W₁ <W2.

The second insulation layer 42 in the insulating component 4 can be a single layer or multiple layers. The first insulation layer 41 and the second insulation layer 42 in the insulating component 4 can be individually arranged on the outer shell 1, or the first insulation layer 41 and the second insulation layer 42 can be connected together and then entirely arranged on the outer side of the outer shell 1. The two adjacent layers of insulation layers within the insulating component 4 can be bonded to each other, and the layer of the insulation layer closest to the outer shell 1 can adhere to the outer surface of the outer shell 1.

The water absorption rate is the percentage of absorbed water mass, for instance, if a material has a water absorption rate of 1%, it means that 1 g of that material can absorb 0.01 g of water.

As an example, the material damage temperature of the second insulation layer 42 is lower than that of the first insulation layer 41. Specifically, the material damage temperature of the second insulation layer 42 is lower than 400°C.

In the embodiment, the water absorption rate of each layer of the second insulation layer 42 is lower than the water absorption rate of each layer of the first insulation layer 41. The second insulation layer 42 possesses excellent water repellency. The arrangement of the second insulation layer 42 enhances the waterproofing capability of the insulating component 4, and reduces the risk of insulation performance failure due to the contact between the outer shell 1 of the battery cell 10 and water throughout the lifecycle. As a result, the insulation performance of the battery cell 10 is improved over the lifecycle.

In some embodiments, W₁ ≤0.5 %.

Exemplarily, W₁ can be 0.1%, 0.2%, 0.3%, 0.4%, 0.5%, and the like.

In the embodiment, the water absorption rate of the second insulation layer 42 is controlled to be below 0.5% (including 0.5%). Therefore, the second insulation layer 42 possesses excellent water-repelling capability, thereby reducing the likelihood of the outer shell 1 of the battery cell 10 coming into contact with water during the lifecycle.

In some embodiments, the thickness of each layer of the second insulation layer 42 is L₂, satisfying L₂ ≤ 30 µm.

Exemplarily, L₂ can be 5 µm, 10 µm, 15 µm, 20 µm, 25 µm, 30 µm, and the like.

Preferably, L₂ ≤ 25 µm.

An excessive thickness of the second insulation layer 42 can result in a poor bendability, such that the difficulty in bending the second insulating layer 42 is increased, and the difficulty in arranging the second insulating layer 42 on the outside of the outer shell 1 is increased. As an example, when both the first insulation layer 41 and the second insulation layer 42 in the insulating component 4 are provided as a single layer, and the second insulation layer 42 is located on the outer side of the first insulation layer 41, it is possible to first cover the outer shell 1 by the first insulation layer 41 and then cover the first insulation layer 41 by the second insulation layer 42. If the thickness of the second insulation layer 42 is excessively thick, it becomes more difficult to make the second insulation layer 42 cover the first insulation layer 41. Furthermore, an excessive thickness of the second insulation layer 42 also leads to an increase in the volume of the battery cell 10. For the battery 100, the internal space of the box 20 is limited. With the increase in the volume of battery cell 10, the number of battery cells 10 that can be arranged within the box 20 decreases, thereby affecting the energy density of the battery 100.

Therefore, the thickness of each layer of the second insulation layer 42 is controlled to be below 30 µm (including 30 µm). On the one hand, it can reduce the thickness of the insulating component 4, decrease the volume of the battery cell 10, reduce the external space occupied by the battery cell 10, and enhance the energy density of the battery 100. On the other hand, it can effectively reduce the difficulty of bending the second insulation layer 42, improve the manufacturability of arranging the second insulation layer 42 on the outside of the outer shell 1, reduce the rate of manufacturing defects, and reduce the difficulty of appearance control for arranging the second insulation layer 42 on the outer side of the outer shell 1.

In some embodiments, the material of each layer of the second insulation layer 42 comprises at least one of polyethylene glycol terephthalate (PET), liquid crystal polymer (LCP), polycarbonate (PC), polyoxymethylene (POM), and polyphenylene sulfide (PPS).

The polyethylene glycol terephthalate has a water absorption rate of 0.1 %-0.2%, the liquid crystal polymer has a water absorption rate of 0.03%, the polycarbonate has a water absorption rate of 0.1%-0.2%, the polyoxymethylene has a water absorption rate of 0.11%-0.5%, and the polyphenylene sulfide has a water absorption rate of 0.01%-0.07%. Taking the material for the first insulation layer 41 in the insulating component 4 being polyimide and the material for the second insulation layer 42 being polyethylene glycol terephthalate as an example, the water absorption rate of polyimide is 1.34%-1.43%, which achieves a situation where the water absorption rate of the second insulation layer 42 is lower than that of the first insulation layer 41.

The aforementioned materials are all insulating materials, and their water absorption rates do not exceed 0.5%. The second insulation layer 42 made of the above materials possesses both excellent water-repellent capability and good insulation performance.

In some embodiments, referring to FIG. 6, at least one layer of the first insulation layer 41 is arranged between one layer of the second insulation layer 42 and the outer shell 1.

It should be noted that the first insulation layer 41 between the outer shell 1 and one layer of the second insulation layer 42 can be one layer or multiple layers. For example, two layers of the first insulation layer 41 are arranged between one layer of the second insulation layer 42 and the outer shell 1.

In the embodiment, the second insulation layer 42 serves a protective role for the first insulation layer 41, as the second insulation layer 42 can prevent the first insulation layer 41 from coming into contact with water. This reduces the risk of insulation performance failure in the first insulation layer 41 due to water absorption.

In some embodiments, referring to FIG. 6, one layer of the first insulation layer 41 is arranged between one layer of the second insulation layer 42 and the outer shell 1.

In the embodiment, only by arranging the first insulation layer 41 on the outer shell 1 and then arranging the second insulation layer 42 on the first insulation layer 41, the insulating component 4 can be molded on the exterior side of the outer shell 1. As a result, the number of molding steps is reduced and the molding efficiency is enhanced.

In some embodiments, one layer of the first insulation layer 41 is connected to the external surface of the outer shell 1 through a first adhesive layer 43; and/or, one layer of the second insulation layer 42 is connected to one layer of the first insulation layer 41 through a second adhesive layer 44.

In the embodiment, the first adhesive layer 43 can be an adhesive layer, such as pressure-sensitive adhesive, acrylic adhesive, etc. The second adhesive layer 44 can also be an adhesive layer, such as pressure-sensitive adhesive, acrylic adhesive, etc.

During the process of covering the outer surface of the outer shell 1 by the insulating component 4, it is possible that one layer of the first insulation layer 41 is firstly connected to the outer surface of the outer shell 1 through the first adhesive layer 43, and then one layer of the second insulation layer 42 is connected to the outer surface of the one layer of the first insulating layer 41 through the second adhesive layer 44. Therefore, the insulating component 4 is able to cover at least a portion of the outer surface of the outer shell 1.

As an example, both the first adhesive layer 43 and the second adhesive layer 44 can be made of pressure-sensitive adhesive, thus allowing for effective bonding between the first insulation layer 41, the second insulation layer 42, and the outer shell 1. Once bonded, they exhibit strong firmness, and by using pressure-sensitive adhesive, the first insulation layer 41 and the second insulation layer 42 can achieve a highly functional, reliable, and manufacturable wrapping method.

In the embodiment, the first adhesive layer 43 is able to bond one layer of the first insulation layer 41 to the external surface of the outer shell 1, thereby enhancing the firmness of connecting the layer of the first insulation layer 41 to the outer shell 1. The second adhesive layer 44 is able to bond one layer of the second insulation layer 42 to one layer of the first insulation layer 41, thereby enhancing the firmness of connecting the layer of the second insulation layer 42 to the layer of the first insulation layer 41.

In some embodiments, referring to FIG. 6, an outermost layer of the insulating component 4 is the second insulation layer 42.

It should be noted that in the insulating component 4, whether the first insulation layer 41 is a single layer or multiple layers, and whether the second insulation layer 42 is a single layer or multiple layers, the outermost layer of the insulating component 4 can be the second insulation layer 42.

As the outermost layer of the insulating component 4, the second insulation layer 42 serves to protect all the first insulation layers 41 within the insulating component 4, thereby reducing the risk of insulation performance failure in the first insulation layers 41 due to water absorption.

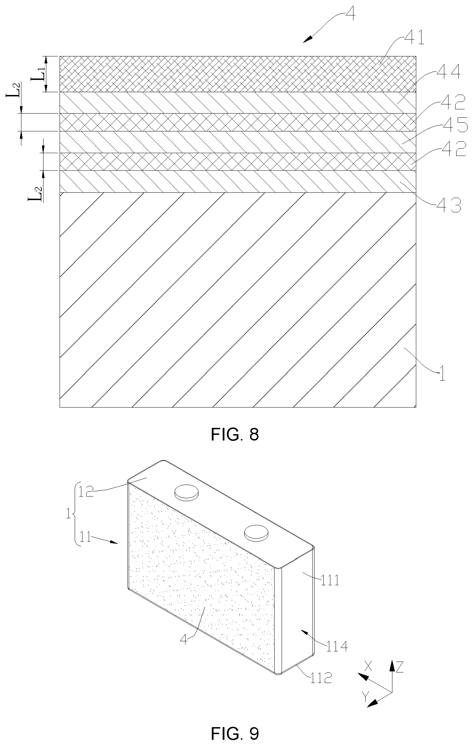

In some embodiment, referring to FIGS. 7 and 8, FIG. 7 is partial sectional view of the connection of insulating component 4 to the outer shell 1 provided in some other embodiments of the present disclosure, and FIG. 8 is partial sectional view of the connection of insulating component 4 to the outer shell 1 provided in some other embodiments of the present disclosure. At least one layer of the second insulation layer 42 is arranged between one layer of the first insulation layer 41 and the outer shell 1.

It should be noted that the second insulation layer 42 between the outer shell 1 and one layer of the first insulation layer 41 can be one layer or multiple layers.

In the embodiment, the first insulation layer 41 serves a protective role for the second insulation layer 42, which ensures that the second insulation layer 42 is less susceptible to thermal damage even when the external temperature of the battery cell 10 is excessively high. This guarantees that the second insulation layer 42 maintains excellent water-repellent capability.

In some embodiments, referring to FIG. 7, one layer of the second insulation layer 42 is arranged between one layer of the first insulation layer 41 and the outer shell 1.

In the embodiment, only by arranging the second insulation layer 42 on the outer shell 1 and then arranging the first insulation layer 41 on the second insulation layer 42, the insulating component 4 can be molded on the exterior side of the outer shell 1. As a result, the number of molding steps is reduced and the molding efficiency is enhanced.

In some embodiments, referring to FIG. 7, one layer of the second insulation layer 42 is connected to the external surface of the outer shell 1 through a first adhesive layer 43; and/or, one layer of the first insulation layer 41 is connected to one layer of the second insulation layer 42 through a second adhesive layer 44.

In the embodiment, the first adhesive layer 43 can be an adhesive layer, such as pressure-sensitive adhesive, acrylic adhesive, etc. The second adhesive layer 44 can also be an adhesive layer, such as pressure-sensitive adhesive, acrylic adhesive, etc.

During the process of covering the outer surface of the outer shell 1 by the insulating component 4, it is possible that one layer of the second insulation layer 42 is firstly connected to the outer surface of the outer shell 1 through the first adhesive layer 43 and then one layer of the first insulation layer 41 is connected to the outer surface of the one layer of the second insulation layer 42 through the second adhesive layer 44.

In the embodiment, the first adhesive layer 43 is able to bond one layer of the second insulation layer 42 to the external surface of the outer shell 1, thereby enhancing the firmness of connecting the layer of the second insulation layer 42 to the outer shell 1. The second adhesive layer 44 is able to bond one layer of the first insulation layer 41 to one layer of the second insulation layer 42, thereby enhancing the firmness of connecting the layer of the first insulation layer 41 to the layer of the second insulation layer 42.

In some embodiments, referring to FIG. 8, multiple layers of the second insulation layer 42 are arranged between one layer of the first insulation layer 41 and the outer shell 1.

In the embodiment, the second insulation layer 42 between one layer of the first insulation layer 41 and the outer shell 1 can be two layers, three layers, four layers, or even more.

The multiple layers of the second insulation layer 42 are arranged between one layer of the first insulation layer 41 and the outer shell 1, which can enhance the waterproofing capability of the entire insulating component 4, thereby reducing the risk of insulation performance failure in the battery cell 10 due to contact between the outer shell 1 and water throughout the lifecycle.

In some embodiments, referring to FIG. 8, two layers of the second insulation layer 42 are arranged between one layer of the first insulation layer 41 and the outer shell 1.

In some embodiments, the innermost layer of the second insulation layer 42 is connected to the outer surface of the outer shell 1 through the first adhesive layer 43; and/or, one layer of the first insulation layer 41 is connected to the outermost layer of the second insulation layer 42 through the second adhesive layer 44; and/or, two adjacent layers of the second insulating layer 42 are connected through the third adhesive layer 45.

As shown in FIG. 8, for example, when two layers of the second insulation layer 42 are arranged between one layer of the first insulation layer 41 and the outer shell 1, the inner layer of the second insulation layer 42 is connected to the outer surface of the outer shell 1 through the first adhesive layer 43; one layer of the first insulating layer 41 is connected to the outer layer of the second insulation layer 42 through the second adhesive layer 44; and the two layers of the second insulation layer 42 are connected through the third adhesive layer 45.

The first adhesive layer 43 is able to bond an innermost layer of the second insulation layer 42 to the external surface of the outer shell 1, thereby enhancing the firmness of connecting the layer of the second insulation layer 42 to the outer shell 1. The second adhesive layer 44 is able to bond one layer of the first insulation layer 41 to the outermost layer of the second insulation layer 42, thereby enhancing the firmness of connecting the layer of the first insulation layer 41 to the layer of the second insulation layer 42. By using the third adhesive layer 45, the two adjacent layers of the second insulation layer 42 are able to be bonded together, thereby enhancing the firmness between the two adjacent layers of the second insulation layer 42 once they are connected with each other.

The first adhesive layer 43 can be an adhesive layer, such as pressure-sensitive adhesive, acrylic adhesive, etc. The second adhesive layer 44 can also be an adhesive layer, such as pressure-sensitive adhesive, acrylic adhesive, etc. The third adhesive layer 45 can also be an adhesive layer, such as pressure-sensitive adhesive, acrylic adhesive, etc.

In some embodiments, referring to FIGS. 7 and 8, an outermost layer of the insulating component 4 is the first insulation layer 41.

It should be noted that in the insulating component 4, whether the first insulation layer 41 is a single layer or multiple layers, and whether the second insulation layer 42 is a single layer or multiple layers, the outermost layer of the insulating component 4 can be the first insulation layer 41.

As the outermost layer of the insulating component 4, the first insulation layer 41 protects all the second insulation layers 42 within the insulating component 4, thereby ensuring that the second insulation layers 42 still maintain excellent water-repellent capability even when the external temperature of the battery cell 10 is excessively high.

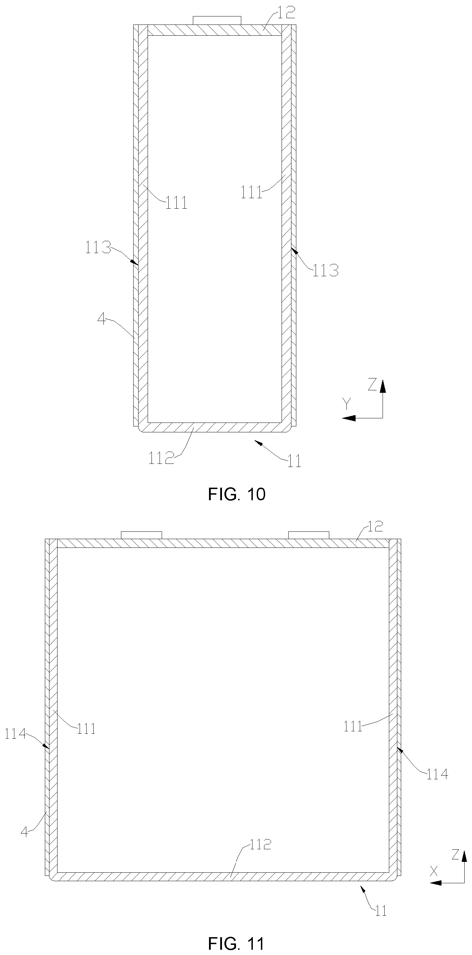

In some embodiment, referring to FIGS. 9 and 10, FIG. 9 is an axonometric view of the connection of insulating component 4 to the outer shell 1 provided in some embodiments of the present disclosure; and FIG. 10 is a sectional view of the connection of insulating component 4 to the outer shell 1 provided in some embodiments of the present disclosure. The outer shell 1 comprises a first side surface 113. When the multiple battery cells 10 are arranged along the first direction, the first side surfaces 113 of two adjacent outer shells 1 are arranged opposite to each other. The insulating component 4 covers at least the first side surfaces 113.

Taking the outer shell 1 as a cuboid for example, among the four side walls 111 of the outer shell 1, the first side surface 113 can be the outer surface of the two side walls 111 located in the width direction Y of the outer shell 1. It can be understood that the first direction is consistent with the width direction Y of the outer shell 1. Alternatively, the first side surface 113 can be the outer surface of the two side walls 111 located in the length direction X of the outer shell 1. In this case, the first direction is consistent with the length direction X of the outer shell 1. The insulating component 4 can cover one first side surface 113 or two first side surfaces 113.

In the case of multiple battery cells 10 arranged along the first direction, the portion of the insulating component 4 covering the first side surface 113 can reduce the risk of short-circuit caused by overlapping between the first side surfaces 113 of two adjacent outer shells 1, thereby achieving insulation between two adjacent battery cells 10.

In some embodiments, the first side surface 113 is the surface that has the largest area in the external surfaces of the outer shell 1, and the first direction is the thickness direction of the battery cell 10.

Taking the outer shell 1 as a cuboid for example, among the four side walls 111 of the outer shell 1, the outer surfaces of the two side walls 111 located in the width direction Y of outer shell 1 are the first side surface 113. The first side surface 113 can also be referred to as the major face of outer shell 1. The thickness direction of battery cell 10 is consistent with the width direction of the outer shell 1.

In the embodiment, since the first direction is the thickness direction of battery cell 10, arranging multiple battery cells 10 along the first direction can reduce the overall dimension of the multiple battery cells 10 that are arranged in the first direction, which is advantageous for enhancing the energy density of the battery 100.

In some embodiments, referring to FIG. 10, the outer shell 1 comprises two first side surfaces 113 arranged opposite each other. The insulating component 4 covers at least the two the first side surfaces 113.

Taking the outer shell 1 as a cuboid as an example, the two first side surfaces 113 are arranged opposite to each other along the width direction Y of the outer shell 1.

When multiple battery cells 10 are arranged along the width direction Y of the outer shell 1, it is possible to achieve insulation between any two adjacent battery cells 10.

In some embodiments, referring to FIG. 11, FIG. 11 is sectional view of the connection of insulating component 4 to the outer shell 1 provided in some other embodiments of the present disclosure. The outer shell 1 also comprises two second side surfaces 114 arranged opposite each other. The two second side surfaces 114 are connected sequentially end-to-end with the two first side surfaces 113. The insulating component 4 also covers the two second side surfaces 114.

Taking the outer shell 1 as a cuboid for example, among the four side walls 111 of the outer shell 1, the outer surfaces of the two side walls 111 located in the length direction X of the outer shell 1 are the second side surface 114. The area of the second side surface 114 is smaller than the area of the first side surface 113.

The insulating component 4 covers both the two first side surfaces 113 and the two second side surfaces 114, thus achieving full covering of four side surfaces of the outer shell 1 by the insulating component 4, which enhances the insulation performance of the battery cell 10.

The embodiments of the present disclosure provide a battery 100, which comprises a box 20 and a battery cell 10 provided in any embodiment described above. The battery cell 10 is contained within the box 20.

In some embodiments, the battery 100 comprises multiple battery cells 10, and there is a voltage difference between two adjacent battery cells 10. The voltage difference is denoted as U with a unit of V (volt), satisfying: L₁≥ (0.4U+30)µm.

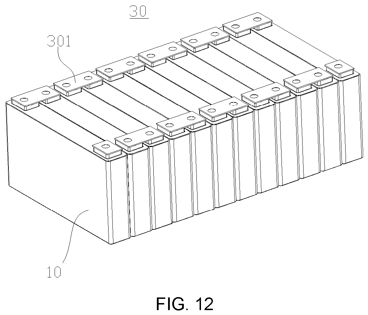

Referring to FIG. 12, FIG. 12 provides a schematic diagram of the structure of a battery module 30 in some embodiments of the present disclosure. As an example, when multiple battery cells 10 are connected in series, parallel, or hybrid through the busbar component 301 to form the battery module 30, the multiple battery cells 10 are arranged along the width direction Y of the shell. There may be a voltage difference between two adjacent battery cells 10.

The insulation performance of the first insulation layer 41 can be compromised in high-temperature environments. Within all the first insulation layers 41, the portion of the external surface of the outer shell 1 that is closer to the battery cell 10 will lose its insulating function. When the voltage difference between two adjacent battery cells 10 increases, the thickness of the first insulation layer 41 which has lost its insulating function will also increase. Consequently, there is a need to increase the total thickness of all the first insulation layers 41.

Therefore, by setting the relationship equation between the voltage difference between battery cells 10 and the total thickness of all the first insulation layers 41, as described above, it ensures that the battery cells 10 maintain good insulation performance in high-temperature and high-voltage environments.

The embodiments of the present disclosure further provide an electrical device, which includes battery cell 10 provided by any of the embodiments as described above. The battery cell 10 is configured to supply electric energy to the electrical device.

Additionally, as shown in FIGS 6, 10, and 11, embodiments of the present disclosure further provide a square shell battery 100, comprising an outer shell 1 and an insulating component 4. The outer shell 1 comprises two oppositely arranged first side surfaces 113 and two oppositely arranged second side surfaces 114, wherein the two first side surfaces 113 and two second side surfaces 114 are sequentially connected end-to-end. The first side surface 113 is the surface having the largest area among the outer surfaces of the outer shell 1. The insulating component 4 is wrapped around the outer side of the outer shell 1, so as to cover the two first side surfaces 113 and the two second side surfaces 114. The insulating component 4 comprises one layer of the first insulation layer 41 and one layer of the second insulation layer 42. The first insulation layer 41 is closer to the outer shell 1 compared to the second insulation layer 42. The first insulation layer 41 is connected to the outer shell 1 through the first adhesive layer 43, while the second insulation layer 42 is connected to the first insulation layer 41 through the second adhesive layer 44. The material of the first insulation layer 41 is polyimide, and the thickness of the first insulation layer 41 is not less than 30 µm. The material of the second insulation layer 42 is polyethylene glycol terephthalate.

In such a square shell battery 100, the insulating component 4 fully covers the four side surfaces of the outer shell 1, thereby enhancing the insulation performance of the battery cell 10. Furthermore, due to the material of the first insulation layer 41 being polyimide, the first insulation layer 41 possesses excellent high-temperature resistance, thereby enhancing the insulation performance of the battery cell 10 in high-temperature environments. Due to the material of the second insulation layer 42 being polyethylene glycol terephthalate, the second insulation layer 42 possesses a strong water-resistant property, thereby enhancing the water-blocking capability of the insulating component 4.

One or more embodiments are next described in more detail with reference to the following examples. These examples, of course, do not limit the scope of one or more embodiments.

### Example 1

The battery cell 10 was a lithium iron phosphate battery. Both the first insulation layer 41 and the second insulation layer 42 in the insulating component 4 were single layers. The material of the first insulation layer 41 was polyimide (PI), and L₁=30 µm. The material of the second insulation layer 42 is polyethylene glycol terephthalate (PET), and L₂=30 µm.

The insulation performance, arc resistance capability, and water repellency of insulating component 4 were tested when the battery cell 10 experienced thermal runaway.

### Example 2

The difference between Example 2 and Example 1 was that L₁=60 µm.

### Example 3

The difference between Example 3 and Example 1 was that L₂=25 µm.

### Example 4

The difference between Example 4 and Example 1 was that the insulating component 4 comprised the first insulation layer 41 but did not comprise the second insulation layer 42.

### Comparative Example 1

The difference between Comparative Example 1 and Example 1 was that the insulating component 4 comprised the second insulation layer 42 but did not comprise the first insulation layer 41.

### Comparative Example 2

The difference between Comparative Example 2 and Example 1 was that L₁=25 µm.

### Comparative Example 3

The difference between Comparative Example 3 and Example 1 was that L₂=60 µm.

The experimental parameters and test results for Examples 1 to 4, as well as Comparative Examples 1 to 3, are provided in Table 1.

**Table 1**

| | The material of the first insulation layer | L₁(µm) | The material of the second insulation layer | L₂(µm) | The duration maintaining insulation of the insulating component at an ambient temperature of 250 °C | The water absorption rate of the insulating component | The molding yield of the second insulation layer |
|---|---|---|---|---|---|---|---|
| Example 1 | PI | 30 | PET | 30 | > 15min | < 0.5% | > 99% |
| Example 2 | PI | 60 | PET | 30 | > 15min | < 0.5% | > 99% |
| Example 3 | PI | 30 | PET | 25 | > 15min | < 0.5% | > 99% |
| Example 4 | PI | 30 | / | / | > 15min | > 1.3% | / |
| Comparative Example 1 | / | / | PET | 30 | < 5min | < 0.5% | > 99% |
| Comparative Example 2 | PI | 25 | PET | 30 | < 5min | < 0.5% | > 99% |
| Comparative Example 3 | PI | 30 | PET | 60 | > 15min | < 0.5% | < 95% |

From Table 1, it can be observed that the material of the first insulation layer 41 in the insulating component 4 is polyimide (PI), and the material damage temperature T of polyimide is greater than or equal to 400°C. When L₁ is greater than or equal to 30µm, the insulation performance of the insulating component 4 can be maintained to be effective for a long time period under high-temperature environments. The insulation performance of the insulating component 4 is less likely to fail due to thermal runaway of battery cell 10 in the high-temperature environments, which offers excellent arc resistance capability. When L₁ is less than 30 µm, the insulation performance of the insulating component 4 is effective for a shorter period in high-temperature environments, and its arc resistance capability is poor.

If the insulating component 4 is not provided with the first insulation layer 41 and only the second insulation layer 42 is arranged, with a material damage temperature of the second insulation layer 42 being less than 400°C, even if the thickness of the second insulation layer 42 is not less than 30 µm, the insulation performance of the insulating component 4 will still have a shorter effective duration in high-temperature environments, and its arc resistance capability will be poor. Furthermore, when the insulating component 4 comprises both the first insulation layer 41 and the second insulation layer 42, the second insulation layer 42 can enhance the waterproofing capability of the insulating component 4, and reduce the risk of insulation performance failure due to the contact between the outer shell 1 of the battery cell 10 and water throughout a lifecycle. As a result, the insulation performance of the battery cell 10 is improved over the lifecycle. In addition, when the thickness L₂ of the second insulation layer 42 is less than or equal to 30 µm, the second insulation layer 42 possesses a higher molding yield.

It should be noted that, without conflict, the embodiments and the features in the embodiments in the present disclosure can be combined with each other.

The above embodiments are provided only to illustrate the technical solutions of the present disclosure and are not intended to limit the present disclosure. For those skilled in the art, various modifications and changes can be made to the present disclosure. Any modification, equivalent substitution, improvement, etc. made within the spirit and principles of the present disclosure shall be included in the scope of protection of the present disclosure.

## Claims

1. A battery cell, comprising
an outer shell; and
an insulating component, covering at least a portion of an external surface of the outer shell,
wherein the insulating component comprises at least one layer of a first insulation layer, wherein a material damage temperature of each layer of the first insulation layer is T, and a total thickness of the at least one layer of the first insulation layer is L₁, satisfying T≥ 400 °C and L₁ ≥ 30 µm.

2. The battery cell according to claim 1, wherein L₁ ≥ (0.1C+30) µm, where C is a capacity of the battery cell in Ah.

3. The battery cell according to claim 1 or 2, wherein L₁ ≥ (0.5H+30) µm, where H is a dimension of the outer shell in a thickness direction of the battery cell in mm.

4. The battery cell according to any one of claims 1 to 3, wherein L₁≤ 200 µm, preferably, L₁ ≤ 60 µm.

5. The battery cell according to any one of claims 1 to 4, wherein T≥ 500 °C.

6. The battery cell according to claim 5, wherein a material of the first insulation layer comprises at least one of polyimide, mica, aerogel, ceramic, and polytetrafluoroethylene.

7. The battery cell according to any one of claims 1 to 6, wherein the insulating component comprises at least one layer of a second insulation layer, wherein the second insulation layer is stacked with the first insulation layer; and a water absorption rate of each layer of the second insulation layer is W₁, and a water absorption rate of each layer of the first insulation layer is W₂, satisfying: W₁ < W₂.

8. The battery cell according to claim 7, wherein W₁≤ 0.5%.

9. The battery cell according to claim 7 or 8, wherein a thickness of each layer of the second insulation layer is L₂, satisfying L₂ ≤ 30 µ m; preferably, L₂ ≤ 25 µm.

10. The battery cell according to any one of claims 7 to 9, wherein a material of each layer of the second insulation layer comprises at least one of polyethylene glycol terephthalate, liquid crystal polymer, polycarbonate, polyoxymethylene, and polyphenylene sulfide.

11. The battery cell according to any one of claims 7 to 10, wherein at least one layer of the first insulation layer is arranged between one layer of the second insulation layer and the outer shell.

12. The battery cell according to any one of claims 7 to 11, wherein one layer of the first insulation layer is arranged between one layer of the second insulation layer and the outer shell.

13. The battery cell according to claim 12, wherein one layer of the first insulation layer is connected to the external surface of the outer shell through a first adhesive layer; and/or, one layer of the second insulation layer is connected to the first insulation layer through a second adhesive layer.

14. The battery cell according to any one of claims 11 to 13, wherein an outermost layer of the insulating component is the second insulation layer.

15. The battery cell according to any one of claims 7 to 10, wherein at least one layer of the second insulation layer is arranged between one layer of the first insulation layer and the outer shell.

16. The battery cell according to any one of claims 7 to 10 and 15, wherein one layer of the second insulation layer is arranged between one layer of the first insulation layer and the outer shell.

17. The battery cell according to claim 16, wherein one layer of the second insulation layer is connected to the external surface of the outer shell through a first adhesive layer; and/or, one layer of the first insulation layer is connected to one layer of the second insulation layer through a second adhesive layer.

18. The battery cell according to any one of claims 7 to 10 and 15, wherein multiple layers of the second insulation layer are arranged between one layer of the first insulation layer and the outer shell.

19. The battery cell according to any one of claims 7 to 10, 15 and 18, wherein two layers of the second insulation layer are arranged between one layer of the first insulation layer and the outer shell.

20. The battery cell according to claim 18 or 19, wherein an innermost layer of the second insulation layer is connected to the outer surface of the outer shell through a first adhesive layer; and/or, one layer of the first insulation layer is connected to an outermost layer of the second insulation layer through a second adhesive layer; and/or, two adjacent layers of the second insulating layer are connected through a third adhesive layer.

21. The battery cell according to any one of claims 15 to 20, wherein an outermost layer of the insulating component is the first insulation layer.

22. The battery cell according to any one of claims 1 to 21, wherein the outer shell comprises a first side surface; and when multiple battery cells are arranged along a first direction, first side surfaces of two adjacent outer shells are arranged opposite to each other, and the insulating component covers at least the first side surfaces.

23. The battery cell according to claim 22, wherein the first side surface is a surface that has a largest area in external surfaces of the outer shell, and the first direction is a thickness direction of the battery cell.

24. The battery cell according to claim 22 or 23, wherein the outer shell comprises two first side surfaces arranged opposite each other; and the insulating component covers at least the two first side surfaces.

25. The battery cell according to claim 23 or 24, wherein the outer shell further comprises two second side surfaces arranged opposite each other; the two second side surfaces are connected sequentially end-to-end with the two first side surfaces; and the insulating component further covers the two second side surfaces.

26. A battery, comprising
a box; and
the battery cell according to any one of claims 1 to 25, wherein the battery cell is contained within the box.

27. The battery according to claim 26, wherein the battery comprises multiple battery cells, and a voltage difference exists between two adjacent battery cells, wherein the voltage difference is denoted as U with a unit of V, satisfying: L₁ ≥ (0.4U+30) µm.

28. An electrical device, comprising the battery cell according to any one of claims 1 to 25, wherein the battery cell is configured to provide electrical energy to the electrical device.
